# EUROPÄISCHE PATENTSCHRIFT

(11) **EP 1 326 512 B1**
(45) Veröffentlichungstag und Bekanntmachung des Hinweises auf die Patenterteilung: **03.08.2005**
(21) Anmeldenummer: 01987631.7
(22) Anmeldetag: 16.10.2001
(51) Int. Cl.: A47B 49/00, F16B 12/34

(54) **TRAGSÄULE EINES ECKSCHRANKKARUSSELLS**
SUPPORTING COLUMN FOR A CORNER CUPBOARD CAROUSEL UNIT
COLONNE DE SUPPORT POUR CARROUSEL D'ARMOIRE D'ANGLE

(30) Priorität: 19.10.2000 DE 10051928
(43) Veröffentlichungstag der Anmeldung: 16.07.2003
(73) Patentinhaber: Vauth-Sagel Holding GmbH & Co. KG, 33034 Brakel (DE)
(72) Erfinder: SAGEL, Thomas, 33034 Brakel (DE)
(74) Vertreter: Hanewinkel, Lorenz
(86) Internationale Anmeldenummer: PCT/EP2001/011916
(87) Internationale Veröffentlichungsnummer: WO 2002/032259

(56) Entgegenhaltungen:
- DE-U- 29 823 024
- US-A- 3 186 560
- US-A- 3 266 634
- US-A- 4 678 089

## Beschreibung

Die Erfindung betrifft eine Tragsäule eines Eckschrankkarussells mit einer vertikal angeordneten Teleskopsäule aus einem oberen und einem unteren Säulenabschnitt die längeneinstellbar teleskopierend ineinander stecken, und deren unterer Säulenabschnitt mit Trägern von Türen und Ablagen verbunden ist und drehbar gelagert ist.

Eine derartige Tragsäule ist aus der DE 298 23 024 U1 bekannt.

Diese Tragsäulenanordnung besteht aus bodenseitig und deckenseitig im Schrank einzuschraubenden Flanschen mit je einem vorstehenden Lagerzapfen sowie einer sich dazwischen erstreckenden Teleskopsäule, deren inneres Säulenrohr mittels aufwendigen Zentrier-, Spreiz- und Klemmitteln mit konischen Gewinden in dem äußeren Rohr längenverstellbar festgelegt ist. An der Teleskopsäule sind die Drehteller oder Körbe festgelegt.

Es ist Aufgabe der Erfindung eine einfachere leichter zu montierende Tragsäule zu schaffen.

Die Lösung besteht darin, daß der obere Säulenabschnitt mit einer Bajonett- und Rastverbindung deckseitig im Eckschrank lösbar gehalten ist und der untere Säulenabschnitt drehbar in dem oberen Säulenabschnitt gelagert ist und axial gegen ein Zusammenschieben mit einem lösbaren Sicherungsmittel passend zwischen dem Eckschrankboden und der Eckschrankdecke festgelegt ist.

Die wesentliche Neuerung besteht darin, daß die beiden Säulenrohre ineinander drehbar sind und das obere Säulenrohr jeweils drehfest lösbar verrastet deckenseitig festgelegt ist. In axialer Richtung sind übereinander Bohrungen in dem oberen äußeren Säulenrohr angeordnet, durch die ein Sicherungsstift hindurchgesteckt ein unbeabsichtigtes Einschieben und Anheben des unteren Säulenrohres verhindert.

Die lösbare Verbindung des oberen Säulenabschnittes mit einer an einer üblicher Weise deckenseitig im Schrank angeordneten Kreuzstrebe erfolgt über einen mit Rasthaken besetzten Flansch in einer am Strebenkreuz festgelegten Rastplatte. Diese weist in einem leicht abgesenkten Bereich zu den nach oben vorstehenden seitlich abgebogenen Rasthaken zum Durchstecken der Haken passende Ausnehmungen auf, die jeweils zirkular sich erstreckende schmalere Ausnehmungsschlitze aufweisen, in die die vertikalen Hakenabschnitte passen, so daß ein ebener Bajonettverschluß gebildet ist. Kleine Rastvorsprünge und Rastnasen an der Rastplatte und passend dazu am Flansch verhindern ein unbeabsichtigtes Lösen des Verschlusses, ermöglichen aber ein einfaches Lösen mit einem Drehhandgriff.

Vorzugsweise sind drei oder vier Rasthaken am Flansch seitlich durch Freischnitt und Biegeverformung ausgebildet. Der obere Säulenabschnitt stellt eine längere Lagerbuchse dar, die mit dem Flansch fest verbunden ist.

Das untere Säulenlager besteht vorteilhaft aus einer gespritzten Kunststoffplatte mit einer ringförmigen Lagervertiefung, in der der untere Säulenabschnitt drehbar gelagert ist. Die Lagerplatte ist am Schrankboden zu verschrauben.

Die ganze Säule weist incl. der Lager und der Halte- und Rastplatte sowie des Sicherungsstiftes nur fünf leicht herstellbare Teile auf, und sie ist durch Ziehen des Stiftes und eine Vierteldrehung der oberen Säule zu lösen und herausnehmbar. Endsprechend einfach und zeitsparend ist der Einbau. Ein mangelhaftes Festziehen oder ein Losdrehen eines Gewindes kann nicht passieren, da die Bajonetthaken und Rasten sowie der Sicherungsstift die Teile formschlüssig zusammenhalten.

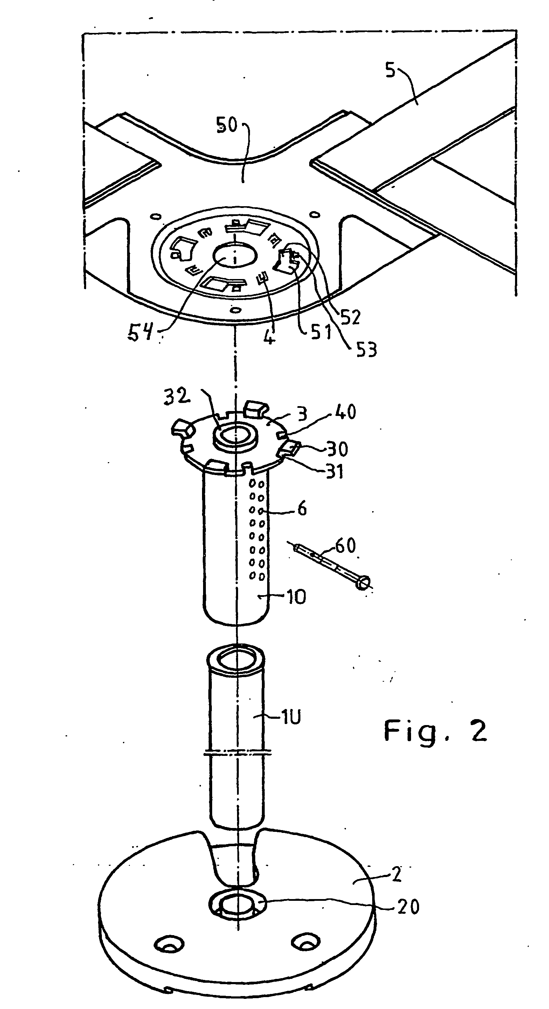

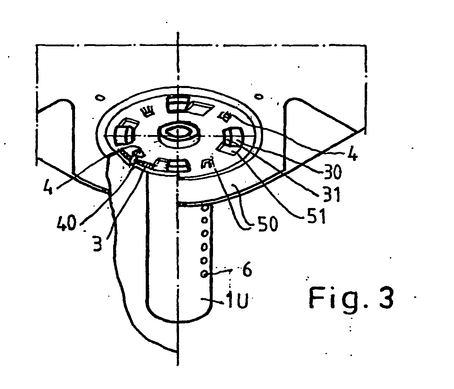

Vorteilhafte Ausgestaltungen sind in den Figuren 1 bis 3 dargestellt.
- Fig. 1: zeigt einen geöffneten Eckschrank ohne Deckplatte;
- Fig. 2: zeigt eine Explosionszeichnung der Säule verkürzt;
- Fig. 3: zeigt die Bajonettverbindung teilweise geöffnet.

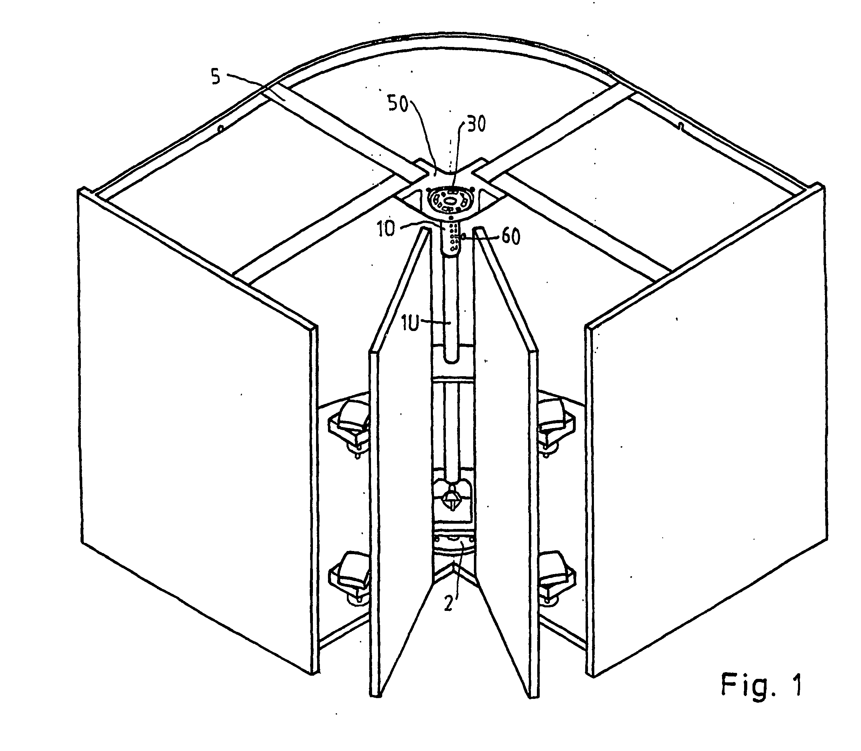

Figur 1 zeigt eine Gesamtansicht eines Eckschrankes bei abgenommener Deckplatte ohne Drehteller oder -körbe mit Türbeschlägen und Türen an der zentralen Teleskopsäule 1U, 1O.

Der untere Teleskopsäulenabschnitt 1U ist in einer Lagerplatte 2 in einer ringförmigen Lagerausnehmung 20 gelagert, die zu dem Teleskoprohrquerschnitt paßt. Die Lagerplatte 2 ist vorzugsweise aus Kunststoff gespritzt und am Boden des Eckschrankes verschraubt.

Der obere Teleskopabschnitt 1O umfaßt den unteren in seinem oberen Abschnitt in loser Passung und bildet dessen oberes Drehlager. An seinem oberen Ende trägt er einen Flansch 3, der an nach oben gerichteten Kröpfungen 31 sich radial erstreckende Haken 30 trägt. Zwischen den Haken 30 sind in den Flanschrand Rastausschnitte 40 eingebracht.

Der Eckschrank ist obenseitig in bekannter Weise durch eine Kreuzstrebe 5 zusammengehalten, die über dem Flansch 3 eine Rastplatte 50 trägt, die konzentrisch zur Lagerausnehmung 20 und der Säule 1U, 1O eine flache Einsenkung aufweist, in der lose passend zu den Haken 30 Ausnehmungen 51 gestanzt sind, die lose passend zu den Kröpfungen 31 zirkular sich weiter in Ausnehmungsschlitze 52 erstrecken. Die Haken 30, Kröpfungen 31, Ausnehmungen 51 und Ausnehmungsschlitze 52 bilden zusammen eine ebene Bajonettverbindung. Außerdem trägt die Rastplatte 50 Rastnasen 4, die bei eingedrehtem Bajonettverschluß in den Rastausschnitten 40 Halt finden und lösbar einrasten. Radial neben den Schlitzen 52 befinden sich hochgedrückte Vorsprünge 53, die die eingedrehten Haken 30 anheben und den Flansch 3 fest an die Rastplatte 50 ziehen.

Der obere Säulenabschnitt 1O, der den unteren muffenartig umgibt, ist von Reihen übereinander angeordneter Querbohrungen 6 durchsetzt. Dicht über dem innen steckenden Ende des unteren Säulenabschnittes 1U ist ein Sicherungsstift 60 durch die entsprechende Querbohrung gesteckt, so daß der untere Säulenabschnitt 1U in seiner Höhenlage fixiert ist und nicht unbeabsichtigt aus dem unteren Lager 20 herausgehoben werden kann.

Welcher Säulenabschnitt innen oder außen angeordnet wird und auf welcher Seite der Bajonett- und Rastverbindung die Haken und Ösen sowie Nocken und Rastausschnitte ausgebildet sind, ist dem Fachmann überlassen. Die flache Ausbildung der Verbindung erlaubt die feste Verbindung des Flansches mit dem Rohr und bietet eine hohe Stabilität. Statt der vorzugsweise vorgesehenen vier Bajonetthaken können auch zwei, drei oder mehr vorgesehen sein. Der obere Säulenabschnitt 1O und der Flansch 3 mit den Haken 30 und Rastausschnitten 40 läßt sich statt aus Metall auch spritztechnisch aus Kunststoff herstellen.

Vorzugsweise ist mittig auf dem Flansch 3 ein axial die Haken 30 überragender ringförmiger Zentrierfortsatz 32 angeordnet, der in loser Passung in eine kreisförmige Zentrieröffnung 54 der Rastplatte 50 paßt, so daß das Indeckungbringen der Haken 30 mit den Ausnehmungen 51 problemlos ohne Hinsehen erfolgen kann.

## Patentansprüche

1. Tragsäule eines Eckschrankkarussells mit einer vertikal angeordneten Teleskopsäule (1O, 1U) aus einem oberen und einem unteren Säulenabschnitt (1O, 1U), die längeneinstellbar teleskopierend ineinander stecken; und deren unterer Säulenabschnitt (1U) mit Trägern von Türen und Ablagen verbunden ist und drehbar gelagert ist, **dadurch gekennzeichnet, daß** der obere Säulenabschnitt (1O) mit einer Bajonett- und Rastverbindung (30, 31; 50, 51, 52; 4, 40) deckseitig im Eckschrank lösbar gehalten ist und der untere Säulenabschnitt (1U) drehbar in dem oberen Säulenabschnitt (1O) gelagert ist und axial gegen ein Zusammenschieben mit einem lösbaren Sicherungsmittel (6, 60) passend zwischen dem Eckschrankboden und der Eckschrankdecke festgelegt ist.

2. Tragsäule nach Anspruch 1, **dadurch gekennzeichnet, daß** der obere Säulenabschnitt (1O) oben einen Flansch (3) trägt, der an nach oben gerichteten Kröpfungen (31) radial gerichtete Haken (30) trägt und auf dem Flansch (3) eine Rastplatte (50) mit zu den Haken (30) lose passenden Ausnehmungen (51) und daran zirkular anschließenden Ausnehmungsschlitzen (52), die lose zu den Kröpfungen (31) passen, so daß eine ebene Bajonettverbindung gebildet ist.

3. Tragsäule nach Anspruch 1 oder 2, **dadurch gekennzeichnet, daß** der Flansch (3) mindestens einen Rastausschnitt (40) aufweist, der bei eingedrehter Bajonettverbindung mit einer dazu passend an der Rastplatte (50) angeordneten Rastnase (4) lösbar verrastet ist.

4. Tragsäule nach einem der vorstehenden Ansprüche, **dadurch gekennzeichnet, daß** die Rastplatte (50) eine flache Einsenkung aufweist, die die Haken (30) bei hergestellter Bajonettverbindung aufnimmt.

5. Tragsäule nach einem der vorstehenden Ansprüche, **dadurch gekennzeichnet, daß** die Rastplatte (50) fest mit einer deckseitig im Eckschrank angeordneten Kreuzstrebe (5) verbunden ist.

6. Tragsäule nach einem der vorstehenden Ansprüche, **dadurch gekennzeichnet, daß** einer der Säulenabschnitte (1O) von übereinander beabstandet angeordneten Querbohrungen (6) durchsetzt ist und ein hindurchgesteckter Sicherungsstift (60) das Sicherungsmittel ist.

7. Tragsäule nach einem der vorstehenden Ansprüche, **dadurch gekennzeichnet, daß** der untere Säulenabschnitt (1U) untenendig in einer passenden Lagerausnehmung (20) einer bodenseitig im Eckschrank befestigten Lagerplatte (2) drehbar steckt.

8. Tragsäule nach einem der vorstehenden Ansprüche, **dadurch gekennzeichnet, daß** die Lagerplatte (2) und/oder der obere Säulenabschnitt (1O) mit dem Flansch (3) und den Bajonettteilen (30, 31) aus Kunststoff gespritzt ist/sind.

9. Tragsäule nach einem der Ansprüche 2 bis 7, **dadurch gekennzeichnet, daß** der Flansch (3) mit den Kröpfungen (31) und Haken (30) biegegestanzt ist.

10. Tragsäule nach einem der Ansprüche 2 bis 9, **dadurch gekennzeichnet, daß** die Rastplatte (50) biegegestanzt ist.

11. Tragsäule nach einem der vorstehenden Ansprüche, **dadurch gekennzeichnet, daß** radial neben den Ausnehmungsschlitzen (52) Vorsprünge (53) nach oben gerichtet angeordnet sind, daß bei eingedrehten Haken (30) diese angehoben sind und der Flansch (3) fest an die Rastplatte (50) gezogen ist sowie die Rastnasen (4) in den Rastausschnitten (40) festen Halt haben.

12. Tragsäule nach einem der vorstehenden Ansprüche, **dadurch gekennzeichnet, daß** der Flansch (3) und die Rastplatte (50) ineinander passende Zentriermittel (32, 54) tragen, die axial vor den Haken (30) in Eingriff kommen.

13. Tragsäule nach Anspruch 12, **dadurch gekennzeichnet, daß** die Zentriermittel ein ringförmiger Zentrierfortsatz (32) und eine kreisförmige Zentrierausnehmung (54) sind.

## Claims

1. A support column of a corner cupboard carousel comprising a vertically arranged telescopic column (1O, 1U) comprising an upper and a lower column portion (1O, 1U) which fit telescopically adjustably in respect of length into each other and whose lower column portion (1U) is connected to supports of doors and storage means and is mounted rotatably, **characterised in that** the upper column portion is releasably held at the top end in the corner cupboard by a bayonet and latching connection (30, 31; 50, 51, 52; 4, 40) and the lower column portion (1U) is mounted rotatably in the upper column portion (1O) and is fixed axially to prevent them from being pushed together by a releasable securing means (6, 60) in such a way as to fit between the bottom of the corner cupboard and the top of the corner cupboard.

2. A support column according to claim 1 **characterised in that** the upper column portion (1O) carries at its top a flange (3) which carries hooks (30) directed radially outwardly on upwardly directed offset portions (31) and on the flange (3) a latching plate (50) with openings (51) fitting loosely in relation to the hooks (30) and thereon circularly adjoining opening slots (52) which loosely fit in relation to the offset portions (31) so as to form a flat bayonet connection.

3. A support column according to claim 1 or claim 2 **characterised in that** the flange (3) has at least one latching cut-out (40) which when the bayonet connection is rotated into place is latched releasably to a latching nose (4) arranged in fitting relationship therewith on the latching plate (50).

4. A support column according to one of the preceding claims **characterised in that** the latching plate (50) has a shallow recess which accommodates the hooks (30) when the bayonet connection is made.

5. A support column according to one of the preceding claims **characterised in that** the latching plate (50) is fixedly connected to a cross-strut (5) arranged at the top end in the corner cupboard.

6. A support column according to one of the preceding claims **characterised in that** transverse bores (6) arranged in mutually superposed spaced relationship pass through one of the column portions (1O) and a securing pin (60) which is fitted therethrough is the securing means.

7. A support column according to one of the preceding claims **characterised in that** the lower column portion (1U) is rotatably inserted at its lower end in a fitting mounting opening (20) of a mounting plate (2) fixed at the bottom end in the corner cupboard.

8. A support column according to one of the preceding claims **characterised in that** the mounting plate (2) and/or the upper column portion (1O) with the flange (3) and the bayonet portions (30, 31) is/are injection moulded from plastic material.

9. A support column according to one of claims 2 to 7 **characterised in that** the flange (3) with the offset portions (31) and hooks (30) is flexurally stamped.

10. A support column according to one of claims 2 to 9 **characterised in that** the latching plate (50) is flexurally stamped.

11. A support column according to one of the preceding claims **characterised in that** projections (53) are arranged directed upwardly radially beside the opening slots (52), that when the hooks (30) are rotated into place they are lifted and the flange (3) is drawn firmly against the latching plate (50) and the latching noses (4) are securely held in the latching cut-outs (40).

12. A support column according to one of the preceding claims **characterised in that** the flange (3) and the latching plate (50) have centering means (32, 54) which fit into each other and which come into engagement axially before the hooks (30).

13. A support column according to claim 12 **characterised in that** the centering means are an annular centering projection (32) and a circular centering recess (54).

## Revendications

1. Colonne de support pour carrousel d'armoire d'angle avec une colonne télescopique (10, 1U), disposée verticalement, comprenant une partie de colonne supérieure et une partie de colonne inférieure (10, 1U), enfilées l'une dans l'autre, en télescope, réglables en longueur, et dont la partie de colonne inférieure (1U) est reliée à des supports de portes et des surfaces de rangement et est montée à rotation, **caractérisée en ce que**
la partie de colonne supérieure (10) est maintenue de manière amovible dans l'armoire d'angle, côté plafond, par assemblage baïonnette et encliquetage (30, 31 ; 50, 51, 52 ; 4, 40), et que la partie de colonne inférieure (1U) est montée à rotation dans la partie de colonne supérieure (10), et axialement fixée, protégée contre les déplacement, adaptée entre le fond et le dessus de l'armoire d'angle, au moyen d'un dispositif de sécurité (6, 60) détachable.

2. Colonne de support selon la revendication 1,
**caractérisée en ce que**
la partie de colonne supérieure (10) porte, en haut, une bride (3) qui est équipée de crochets (30) orientés dans le sens radial, sur des coudes (31) orientés vers le haut, et que, sur la bride (3), est formée une plaque d'encliquetage (50) avec des évidements (51), adaptés lâchement aux crochets (30), et, y faisant suite circulairement, des fentes (52) adaptées lâchement aux coudes (31), de sorte qu'un système d'assemblage à baïonnette plan se trouve ainsi formé.

3. Colonne de support selon la revendication 1 ou 2,
**caractérisée en ce que**
la bride (3) présente au moins une découpe d'encliquetage (40) qui, lors de la fermeture du système d'assemblage à baïonnette, entre en prise, de manière amovible, avec un nez d'arrêt (4) correspondant, disposé sur la plaque d'encliquetage (50).

4. Colonne de support selon l'une des revendications précédentes,
**caractérisée en ce que**
la plaque d'encliquetage (50) présente un enfoncement plat qui reçoit les crochets (30) quand le système d'assemblage à baïonnette est fermé.

5. Colonne de support selon l'une des revendications précédentes,
**caractérisée en ce que**
la plaque d'encliquetage (50) est fixement reliée à une entretoise (5) disposée dans l'armoire d'angle, côté plaque de dessus.

6. Colonne de support selon l'une des revendications précédentes,
**caractérisée en ce que**
l'une des partie de colonne (10) est traversée par des alésages transversaux (6), superposés, à distance les uns des autres, et que l'organe de sécurité est une goupille de sécurité (60) qui est enfiché dans ceux-ci.

7. Colonne de support selon l'une des revendications précédentes,
**caractérisée en ce que**
la partie de colonne inférieure (1U) est enfichée, à rotation, par son extrémité inférieure, dans un évidement approprié (20) d'une plaque de support (2) fixée, côté fond, dans une armoire d'angle.

8. Colonne de support selon l'une des revendications précédentes,
**caractérisée en ce que**
la plaque de support (2) et / ou la partie de colonne supérieure (10) avec la bride (3) et les éléments de baïonnette (30, 31) sont réalisés en matière plastique, par injection.

9. Colonne de support selon l'une des revendications 2 à 7,
**caractérisée en ce que**
la bride (3) est réalisée avec les coudes et les crochets par pliage et découpage combinés.

10. Colonne de support selon l'une des revendications 2 à 9,
**caractérisée en ce que**
la plaque d'encliquetage (50) est réalisée par pliage et découpage combinés.

11. Colonne de support selon l'une des revendications précédentes,
**caractérisée en ce que**
des saillies (53), orientées vers le haut, sont disposées, dans le sens radial, à côté des fentes (52), **en ce que**, lorsque les crochets (30) sont engagés, celles-ci sont soulevées et la bride tirée fixement contre la plaque d'enclenchement (59), et que les nez d'arrêt (4) sont maintenus fixement dans les évidements d'encliquetage (40).

12. Colonne de support selon l'une des revendications précédentes,
**caractérisée en ce que**
la bride (3) et la plaque d'enclenchement (50) porte des moyens de centrage (32, 54) qui, s'adaptant les uns dans les autres, entre en prise dans le sens axial, devant les crochets (30).

13. Colonne de support selon la revendication 12,
**caractérisée en ce que**
les moyens de centrage sont un appendice de centrage (32) en forme d'anneau et un évidement de centrage (54) circulaire.
